Europäisches Patentamt

European Patent Office

Office européen des brevets

(19)

(11) Veröffentlichungsnummer: **0 180 283**
A2

# EUROPÄISCHE PATENTANMELDUNG

(12)

(21) Anmeldenummer: 85201729.2

(22) Anmeldetag: 23.10.85

(51) Int. Cl.⁴: **G 06 K 7/10**, G 06 K 19/06

(30) Priorität: 02.11.84 DE 3440052

(43) Veröffentlichungstag der Anmeldung: 07.05.86
Patentblatt 86/19

(84) Benannte Vertragsstaaten: **AT BE CH FR GB IT LI LU NL SE**

(71) Anmelder: **Pees Steuer- und Regelanlagen GmbH, Gehrstrasse 54, D-4100 Duisburg 11 (DE)**

(72) Erfinder: **Pees, Lothar Heinz, Wiesfurthstrasse 91, D-4133 Neukirchen-Vluyn (DE)**

(74) Vertreter: **Ackmann, Günther, Dr.-Ing., Claubergstrasse 24 Postfach 10 09 22, D-4100 Duisburg 1 (DE)**

(54) **Leseeinrichtung für vorbeibewegte, mit einem Datenträger versehene Transportgüter oder -behälter.**

(57) Bei einer Leseeinrichtung für vorbeibewegte, mit einem Datenträger (10) versehene Transportgüter oder -behälter, welche die in einer Informationsspur (11) des Datenträgers (10) vorhandenen Informationen mittels eines einem Lesekopf (6) zugeordneten Sensors abtastet, in elektrische Impulse umwandelt und an welche eine elektronische Auswertungseinrichtung angeschlossen ist, sind zum Zwecke einer genauen Ablesung auch bei Erschütterungen oder Rückwärtsbewegungen der Lesekopf (6) und die Datenträger (10) mit einer zweikanaligen Taktspur (12) ausgerüstet, in der zwei Sensoren (8, 9) in Transportrichtung versetzt angeordnet sind, welche über eine Vorzeichenlogik ein die Informationsimpluse (18) speicherndes Vorwärts-Rückwärts-Schieberegister steuern. Der Lesekopf (6) ist mit drei Lichtquellen und mit drei die Sensoren (7, 8, 9) bildenden Lichtempfangsdioden und die Datenträger (10) sind auf der Informationsspur (11) und Taktspur (12) mit reflektierenden Markierungen (13) für die Information und die Taktung versehen.

0180283

## Leseeinrichtung für vorbeibewegte, mit einem Datenträger versehene Transportgüter oder -behälter

Die Erfindung betrifft eine Leseeinrichtung für vorbeibewegte, mit einem Datenträger versehene Transportgüter oder -behälter, welche die in einer Informationsspur des Datenträgers vorhandenen Informationen mittels eines einem Lesekopf zugeordneten Sensors abtastet, in elektrische Impulse umwandelt und an welche eine elektronische Auswertungseinrichtung angeschlossen ist, wobei der Datenträger mit einer Taktspur ausgerüstet ist und in dem Lesekopf zwei Sensoren zur Abtastung der Taktspur versetzt angeordnet sind, deren Signale einer Logik zugeführt werden.

In Magazinanlagen, Rangieranlagen oder ähnlichen Transportanlagen ist es üblich, die Transportgüter oder -behälter mit einer automatisch lesbaren Kennung bzw. Numerierung zu versehen, um diese durch Ablesen an bestimmten Stellen auszuschleusen o. dgl. Magazine mit derartigen Leseeinrichtungen sind beispielsweise im pharmazeutischen Großhandel, in Ersatzteillagern der Autoindustrie u. dgl. bekannt, wo teilweise bis zu 2000 Stückgüter oder Behälter automatisch an den zuvor in einem Rechner programmierten Positionen ausgeschleust werden. Für eine Beladung von Behältern kann dieser Ausschleusevorgang oftmalig wiederholt werden, bis der vollbeladene Behälter auf einem Abstellgleis zum Abtransport abgestellt wird. Für einen automatischen Betrieb dieser Art ist eine absolut richtige Ablesung der Behälterkennung bzw. Markierung erforderlich.

Die zum Lesen solcher Kennungen bzw. Informationen von bewegten Transportgütern oder -behältern bekannten Einrichtungen haben entweder einen sehr aufwendigen Aufbau, wobei beispielsweise die Kennung mit Polygonspiegeln oder anderen optischen Einrichtungen mehrfach abgetastet wird, oder es handelt sich um einfache, mit einem Strichcode arbeitende optische Leseeinrichtungen. Alle bekannten Leseeinrichtungen für Transportgüter oder -behälter haben jedoch den Nachteil einer hohen Lesefehlerquote. Eine Fehlerquote von beispielsweise 2 - 5 % verursacht beim Abtasten von z. B. 1000 bis 2000 Stück bereits eine Vielzahl von Fehlinformationen, die den Zusammenbruch der gesamten vorprogrammierten Steuerung zur Folge haben kann.

Die Erfindung geht davon aus, daß ein Transportbehälter eine mechanisch bewegte Einheit darstellt, die beim Transport Erschütterungen ausgesetzt ist, wie beispielsweise beim Transport auf Rollbahnen. Auch stoßen die Behälter häufig aneinander, was zu weiteren Erschütterungen der Behälter führt. Diese Erschütterungen haben zur Folge, daß z. B. bei einem Strichcodeleser die Lesegeschwindigkeit verändert wird, wodurch automatisch eine Fehllesung erfolgt. Bei den meisten bekannten strichcodierten Leseeinrichtungen ist außerdem eine gleichmäßige Bewegung über die gesamte Länge des Datenträgers erforderlich. Um das Ablesen von der Transportgeschwindigkeit unabhängig zu machen, sieht die DE-Al-21 19 431 sowohl für die Taktspur wie auch für die Informationsspur je zwei in Transportrichtung nebeneinanderliegende Sensoren vor, aus deren Signalen jeweils ein Differenzsignal gebildet wird. Mit dieser Maßnahme können aber durch Erschütterungen und etwaige Rückwärtsbewegungen verursachte Fehlinformationen nicht ausgeschaltet werden.

Demgegenüber liegt der Erfindung die Aufgabe zugrunde, eine Leseeinrichtung der gattungsgemäßen Art derart auszubilden, daß auch bei Erschütterungen und Rückwärtsbewegungen des Transportgutes bzw. -behälters eine genaue Ablesung sichergestellt ist, wobei die Leseeinrichtung einen einfachen Aufbau haben soll.

Diese Aufgabe wird erfindungsgemäß dadurch gelöst, daß die Datenträger mit einer zweikanaligen Taktspur ausgerüstet sind, denen jeweils ein Sensor zugeordnet ist und diese Sensoren in Transportrichtung um 90° phasenverschoben versetzt angeordnet sind und über eine Vorzeichenlogik ein die Informationsimpulse speicherndes Vorwärts-Rückwärtsregister steuern.

Diese Ausbildung hat zunächst den Vorteil, daß die Leseeinrichtung auch dann betriebssicher arbeitet, wenn die Markierungen des Datenträgers infolge Erschütterungen, Stöße o. dgl. veränderte Bahngeschwindigkeiten erhalten, oder durch Anstoßen rückwärts bewegt werden. Während die Bahngeschwindigkeit auf die Lesegenauigkeit ganz ohne Einfluß ist, wird bei einer Rückwärtsbewegung des vom Sensor erfaßten Datenträgers auch die gespeicherte Information entsprechend der rücklaufenden Markierungen zurückgeschoben. Erreicht wird dies durch das in Transportrichtung versetzte Abtasten der Taktspur. Die versetzte Anordnung der beiden der Taktspur zugehörigen Sensoren bewirkt, daß in der einen Bewegungsrichtung der eine Sensor und in der anderen Bewegungsrichtung der andere Sensor eine Makierung zuerst tastet. Mit Hilfe der Vorzeichen-

0180283

logik wird der Informationswert des Vorwärts-Rückwärts-Schieberegisters bei einer Bewegung des Datenträgers in Transportrichtung vorwärts und bei einer entgegengesetzten Bewegung rückwärts geschoben. In Verbindung mit dem Schieberegister bleibt eine Teilinformation bei vor dem Lesekopf stehenden Datenträgern auf unbestimmte Zeit erhalten und wird bei einer Bewegungsfortsetzung entsprechend der Bewegungsrichtung vor- oder rückwärts geschoben.

Bei einer besonders geeigneten Ausführung ist der Sendekopf mit drei Lichtquellen und mit drei die Sensoren bildenden Lichtempfangsdioden und sind die Datenträger auf der Informationsspur und Taktspur mit reflektierenden Markierungen für die Information und die Taktung versehen. Eine solche Ausführung arbeitet nach dem an sich bekannten optischen Prinzip der Reflexionslichtschranken, und zwar getrennt auf der Informationsspur und den beiden Kanälen der Taktspur. Die Anwendung dieses Lichtreflexionsprinzips erlaubt eine besonders einfache Ausbildung der an den einzelnen Transportbehältern angebrachten Datenträger und Markierungen sowohl für die Informationsabtastung wie auch für das Abtasten der Taktspur zur Ermittlung der Bewegungsrichtung. Hierfür haben zweckmäßig die auf einem Datenträger aufeinanderfolgenden Markierungen in Transportrichtung die gleiche Breite und einen gleichen Abstand zueinander. Die Impulsfolge eines jeden Kanals der Taktspur ist dadurch gleichmäßig. Die Kennungen bzw. Markierungen können codiert sein, wobei vorzugsweise die Informationsspur des Datenträgers mit einer BCD-codierten Markierung mit in Transportrichtung aufeinanderfolgenden Tetraden und die parallele Taktspur in Transportrichtung fortlaufend mit den Markierungen versehen ist. Dabei kann der eine der Taktspur zugeordnete Sensor am Lesekopf gegenüber dem anderen der Taktspur zugehörigen Sensor in Transportrichtung um etwa die halbe Breite der Markierungen versetzt angeordnet sein. Hierdurch entstehen am Ausgang der beiden Sensoren zwei um 90° phasenverschobene Kanäle.

Alternativ zu der Ausführung mit einer optischen Abtastung besteht auch die Möglichkeit, daß die Sensoren und die Datenträger mit einer magnetischen oder einer pneumatischen Impulseinrichtung versehen sind.

Ein Ausführungsbeispiel der Erfindung ist in der Zeichnung dargestellt; es zeigt:

Abb. 1    eine Transportbahn mit Abzweigungen und der Anordnung einer Leseeinrichtung in einer Draufsicht,

Abb. 2    eine schematische Seitenansicht eines Datenträgers und daneben, um 90° versetzt, die Ansicht eines Lesekopfes,

Abb. 3    die Impulsfolge der Sensoren des Lesekopfes der Abb. 2 in einem Zeitdiagramm und

Abb. 4    ein Blockschaltbild mit einem dem Lesekopf der Abb. 2 zugeordneten Vorwärts-Rückwärts-Schieberegister.

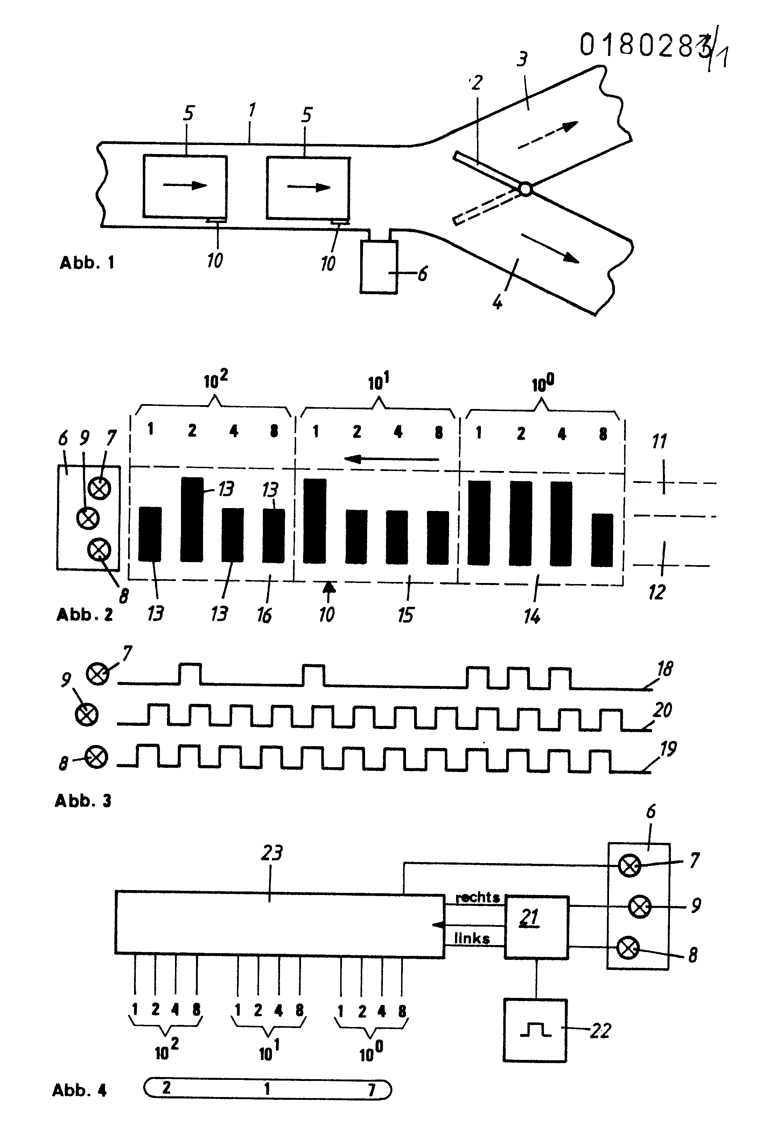

Die in Abb. 1 schematisch dargestellte Transportbahn 1, beispielsweise eine Rollbahn, eine Hängebahn o. dgl. ist mit einem Stellorgan 2 versehen, um Transportbehälter 5 je nach der Kennung bzw. Markierung einer Abzweigung 3 oder 4 zuzuführen. Hierfür werden die Transportbehälter 5 aufeinanderfolgend an einem seitlich neben der Transportbahn 1 angeordneten Lesekopf 6 vorbeibewegt, der die individuelle Kennung der Transportbehälter 5 abtastet und dessen Impulse über eine elektronische Auswertungseinrichtung, z. B. einen Rechner, entsprechend einem Programm in eine Stellgröße für das Stellorgan 2 umgewandelt werden. In einer größeren Transportanlage, z. B. in einem Magazin, sind eine Vielzahl solcher Leseköpfe und Stellorgane 2 angeordnet.

Wie Abb. 1 zeigt, besteht die Leseeinrichtung aus dem neben der Transportbahn 1 angeordneten Lesekopf 6 und den den Transportbehältern 5 zugeordneten Datenträgern 10. Am Lesekopf 6 sind, wie Abb. 2 erkennen läßt, drei Sensoren 7 bis 9 übereinander angeordnet. Beim Ausführungsbeispiel ist der Lesekopf 6 mit drei Lichtquellen und mit drei die Sensoren 7 bis 9 bildenden Lichtempfangsdioden versehen. Der obere Sensor 7 ist zum Abtasten einer auf den Datenträgern 10 angeordneten Informationsspur 11 vorgesehen, während die beiden anderen Sensoren 8,9 einer in zwei Kanäle unterteilten Taktspur 12 zugehören, wobei der Sensor 8 senkrecht unter dem für die Informationsspur 11 bestimmten Sensor 7 und der Sensor 9 gegenüber dem Sensor 8 in Transportrichtung versetzt angeordnet ist. Die Datenträger 10 sind auf der Informationsspur 11 und der Taktspur 12 mit reflektierenden Markierungen 13 für die Information bzw. Kennung und für die Taktung versehen. Die Informationsspur 11 des Datenträgers 10 ist beispielsweise mit einer BCD-codierten Markierung 13 mit in Transportrichtung aufeinanderfolgenden Tetraden versehen. Die parallele Taktspur 12 weist fortlaufend Markierungen 13 in beiden Kanälen auf. Alle Markierungen 13 haben in Transportrichtung die gleiche Breite und einen gleichen Abstand zueinander. Bei dem in Abb. 2 ~~gezeigten~~ Beispiel sind drei Tetradenabschnitte 14 bis 16 vorgesehen, so daß mit diesem Code Zahlen von 0 bis 999 darstellbar sind; der in Abb. 2 dargestellte
Datenträger 10 besitzt z. B. die Zahl 217.

Von besonderer Bedeutung ist die versetzte Anordnung
der Sensoren 8 und 9 in Transportrichtung, die bei
der Ausführung nach Abb. 2 etwa eine halbe Breite
einer Markierung 13 ausmacht. Wird der Datenträger 10
in der vorgegebenen Transportrichtung bewegt, wird
jede Markierung 13 der Taktspur 12 zuerst vom Sensor 8
und dann vom Sensor 9 abgetastet. Bewegt sich der Datenträger 10 jedoch in entgegengesetzter Richtung, z. B.
infolge eines auf den Transportbehälter 5 einwirkenden
Rückstoßes, wird umgekehrt die Taktmarkierung zuerst
vom Sensor 9 und anschließend vom Sensor 8 abgetastet,
wie die in Abb. 3 dargestellten Impulsfolgen 19 und 20
der Taktung erkennen lassen. In Abb. 3 ist auch die
Folge der Informationsimpulse 18 gezeigt.

Die versetzten Impulse der Sensoren 8 bzw. 9 werden
über eine Vorzeichenlogik 21, der ein Taktgeber 22
zugehört, in ein Vorwärts-Rückwärts-Schieberegister
23 eingegeben, welches in der Lage ist, den Informationsinhalt entsprechend der Transportrichtung des
Datenträgers vorwärts (rechts) oder rückwärts (links)
zu schieben. Ist der Datenträger 10 am Lesekopf 6 in
der vorgegebenen richtigen Transportrichtung ganz vorbeibewegt, ist die Information bzw. Kennung des betreffenden Datenträgers im Vorwärts-Rückwärts-Schieberegister 23 gespeichert, in Abb. 4 z. B. die Zahl 217,
und kann für eine elektronische Auswertung von einem
Rechner o. dgl. abgerufen werden.

Patentansprüche

1. Leseeinrichtung für vorbeibewegte, mit einem Datenträger versehene Transportgüter oder -behälter, welche die in einer Informationsspur des Datenträgers vorhandenen Informationen mittels eines einem Lesekopf zugeordneten Sensors abtastet, in elektrische Impulse umwandelt und an welche eine elektronische Auswertungseinrichtung angeschlossen ist, wobei der Datenträger mit einer Taktspur ausgerüstet ist und in dem Lesekopf zwei Sensoren zur Abtastung der Taktspur versetzt angeordnet sind, deren Signale einer Logik zugeführt werden, dadurch gekennzeichnet, daß die Datenträger (10) mit einer zweikanaligen Taktspur (12) ausgerüstet sind, denen jeweils ein Sensor (8,9) zugeordnet ist und diese Sensoren (8,9) in Transportrichtung um 90° phasenverschoben versetzt angeordnet sind und über eine Vorzeichenlogik (21) ein die Informationsimpulse (18) speicherndes Vorwärts-Rückwärts-Schieberegister (23) steuern.

2. Leseeinrichtung nach Anspruch 1, dadurch gekennzeichnet, daß der Lesekopf (6) mit drei Lichtquellen und mit drei die Sensoren (7,8,9) bildenden Lichtempfangsdioden und die Datenträger (10) auf der Informationsspur (11) und Taktspur (12) mit reflektierenden Markierungen (13) für die Information und die Taktung versehen sind.

3. Leseeinrichtung nach Anspruch 1 oder 2, dadurch gekennzeichnet, daß die auf einem Datenträger (10) aufeinanderfolgenden Markierungen (13) in Transportrichtung die gleiche Breite und einen gleichen Abstand zueinander haben.

0180283

4. Leseeinrichtung nach Anspruch 3, dadurch gekennzeichnet, daß die Informationsspur (11) des Datenträgers (10) mit einer BCD-codierten Markierung
(13) mit in Transportrichtung aufeinanderfolgenden Tetraden und die parallele Taktspur (12) in
Transportrichtung fortlaufend mit den Markierungen (13) versehen ist.

5. Leseeinrichtung nach Anspruch 4, dadurch gekennzeichnet, daß der eine der Taktspur (12) zugeordnete Sensor (9) am Lesekopf (6) gegenüber dem anderen der Taktspur (12) zugehörigen Sensor (8) in
Transportrichtung um etwa die halbe Breite der
Markierung (13) versetzt angeordnet ist.

6. Leseeinrichtung nach Anspruch 1, dadurch gekennzeichnet, daß die Sensoren (7,8,9) und die Datenträger (10) mit einer magnetischen oder einer
pneumatischen Impulseinrichtung versehen sind.

0180283/1

Abb. 1

Abb. 2

Abb. 3

Abb. 4